# EUROPEAN PATENT SPECIFICATION

(11) **EP 1 863 885 B1**
(45) Date of publication and mention of the grant of the patent: **24.12.2014**
(21) Application number: 06708268.5
(22) Date of filing: 14.02.2006
(51) Int. Cl.: C09D 11/00, C09B 35/60, C09B 44/08, C09B 45/32, C09B 67/00

(54) **CONCENTRATED DYE SOLUTION**
KONZENTRIERTE FARBSTOFFLÖSUNG
SOLUTIONS CONCENTRÉES DE COLORANTS

(30) Priority: 18.02.2005 EP 05101243
(43) Date of publication of application: 12.12.2007
(73) Proprietor: Clariant Finance (BVI) Limited, Road Town, Tortola (VG)
(72) Inventor: PEDRAZZI, Reinhard, 4054 Basel (CH)
(74) Representative: Ricker, Mathias
(86) International application number: PCT/EP2006/050932
(87) International publication number: WO 2006/087328

(56) References cited:
- EP-A- 0 021 619
- EP-A- 0 224 910
- DE-A1- 3 715 066
- GB-A- 1 438 118
- PATENT ABSTRACTS OF JAPAN vol. 1995, no. 02, 31 March 1995 (1995-03-31) -& JP 06 306304 A (KANEBO LTD), 1 November 1994 (1994-11-01) cited in the application

## Description

The present invention relates to a concentrated storage-stable colour-stable aqueous liquid dye solution and more particularly to a concentrated storage-stable aqueous dye solution without any solubilizer content. The invention further relates to the use of the present invention's concentrated dye solution, if appropriate after dilution with water, especially for dyeing and printing paper, including card and board.

Industrial dyeing and printing is typically carried out in an aqueous medium. Pulverulent dyes must accordingly first be dissolved in mostly warm or hot water to be usable for printing and dyeing.

Metering systems developed for this purpose utilize weighing or volumetric methods to control the metered addition of dyes and require stable dye solutions instead of powders and granules.

Such dye solutions have the advantage that they are easily meterable, do not dust and do not require costly dissolving operations.

The solutions should possess optimum stability, so that they do not precipitate during transportation or storage. Typically, they should be stable for a prolonged period between zero (0) and five (5) degrees Celsius (°C), but also at around 50°C. Similarly, frozen solutions should remain stable after pouring and should not present any stability problems during pumping. Precipitates can cause disruptions in pumping or metering systems and lead to unacceptable machine shutdowns and costly cleaning and maintenance.

JP 06-306304 relates to an aqueous solution of a water-soluble dye which is purified with a reverse osmosis membrane made of polybenzimidazolone having a rejection rate by the membrane of 66% or lower and thereafter a dye dissolution aid is added to the solution. This dye dissolution aid consists essentially of a solution of 80g molten urea stirred into one litre of distilled water comprising 50g ethanol

GB1438118 relates to aqueous dispersions of azo dyestuffs free from water-solubilizing groups which are prepared by coupling, in the presence of an anionic dispersing agent in amount from 20 to 500% of the theoretical weight of dyestuff.

EP0224910 relates to a process for preparing an aqueous-based ink composition for use in ink-jet printers wherein the solubility of acid dyes is increased in the acidic medium over that otherwise obtainable, due to the presence of the alkanol ammonium compound or cation amide compound.

EP0021619 relates to a method of making a concentrated aqueous solution of a dye containing one or more sulphonic acid groups comprising intimately contacting a first aqueous phase comprising an acidic solution of the dye with an organic phase comprising a solution, in an inert water-immiscible organic solvent, of an amine having a greater affinity for the solvent than for water, thereby extracting dye anion from the aqueous phase into the organic phase forming a solution of the amine salt of the dye in the organic solvent, and intimately contacting the organic phase with a second aqueous phase which comprises an aqueous solution of a base having greater affinity for water than for the organic solvent and has a higher pH than the first aqueous phase, thereby extracting dye anion from the organic phase into the second aqueous phase to form a concentrated aqueous solution of the salt of the dye and the base.

One problem of known aqueous dye solutions is the large amounts of added solubilizers, which lead to a high carbon content in the dyehouse or paper mill effluents. This leads to effluents of high total organic carbon (TOC) and chemical oxygen demand (COD), and hence causes high water-treating costs. It is accordingly an object of the present invention to provide a concentrated aqueous dye solution for whose preparation the dye does not have to be isolated and dried (high energy costs!) and which includes few or no solubilizers.

It has now been found that a concentrated aqueous dye solution without addition of solubilizers is storage stable when the dye is not isolated (process solution) but ultrafiltered (nanofiltered) to concentrate it and free it of superfluous chloride ions and the desalting and concentrating is done at moderate temperatures, the pH of the resulting solution being adjusted to a value of around pH = 3. The liquid dye solutions thus obtained are not only storage stable but also colour stable, i.e. the colour does not change during storage. Alternatively, with similar results, pulverulent or granulated dye can be redissolved instead of a process solution being used, and then ultrafiltered (nanofiltered) to concentrate it and free it of superfluous chloride ions.

The concentrated aqueous liquid dye solutions of the present invention comprise one or more cationizable dyes, an organic acid and/or inorganic acid and water and have an at most equimolar chloride ion fraction based on the dye present in the solution, wherein the dye solutions contain from 10 up to 40%by weight of dye, from 0.5% to 25% by weight of the organic acid.

Preferred concentrated aqueous liquid dye solutions of the present invention comprise (i) one or more cationizable dyes of the formula (I): 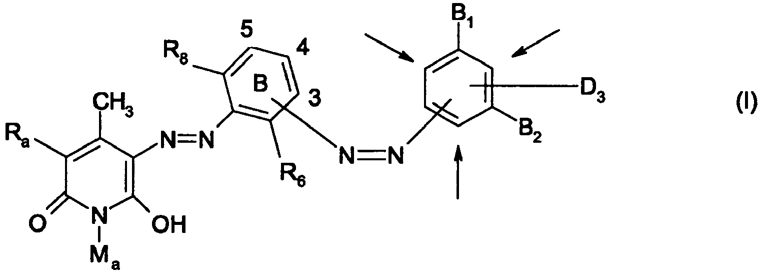 where B₁ and B₂ are independently -OH and NH₂ and D₃ = H or a radical of the formula 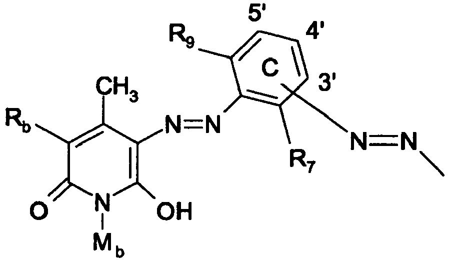 and
- R₆, R₇, R₈ or R₉: are independently H or -SO₃H and
- Mₐ or M_{b}: independently have the meanings of M₁ to M₁₀, where
M₁ is H,
M₂ is-(CH₂)₃)N(CH₃)₂,
M₃ is-(CH₂)₂)N(CH₂CH₃)₂,
M₄ is 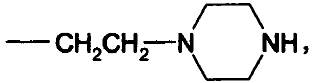
M₅ is 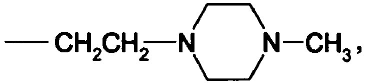
M₆ is 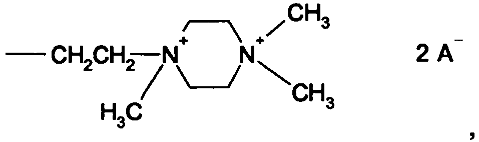
M₇ is 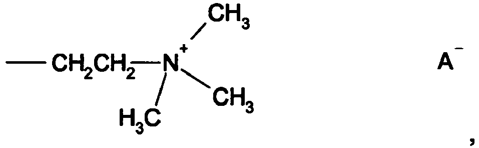
M₈ is 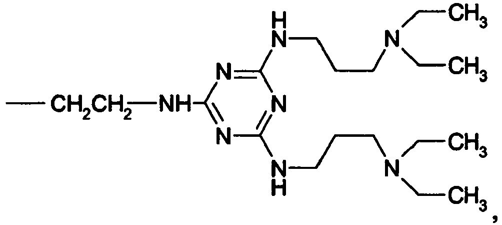
M₉ is 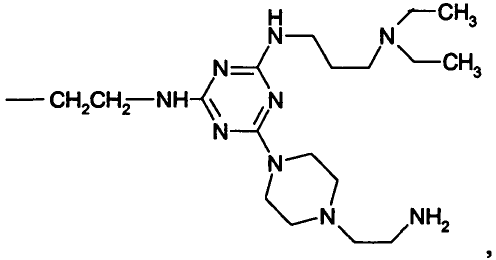 M₁₀ is -(CH₂)₂NH₂
and
- Rₐ or R_{b}: independently have the meanings of R₁ to R₅
R₁ is H,
R₂ is 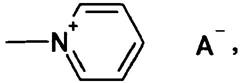
R₃ is 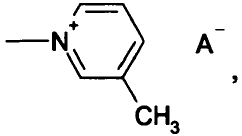
R₄ is CN, 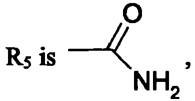
where A⁻ is a non-coloured anion which is the anion of an organic acid and/or the anion of an inorganic acid and
(ii) an organic acid and/or an inorganic acid and
(iii) water and
(iv) having an at most equimolar chloride ion fraction based on the dye present in the solution, , wherein the dye solutions contain from 10 up to 40%by weight of dye, from 0.5% to 25% by weight of the organic acid.

The dyes of the formula (I) are known per se and can be prepared as described in DE3715066.

The present invention's storage-stable high-concentration solutions of dyes of the formula (I) have a formula (I) dye content in the range from 10% to 40% by weight of dye and most preferably a dye content in the range from 20% to 40% by weight of dye.

The concentrated aqueous liquid dye solutions of the present invention preferably have a chloride content of not more than equimolar based on the dye present in the solution, the chloride content being preferably in the range from 0.5 to 1 mol equivalent based on the dye present in the solution and more preferably in the range from 0.8 to 1 mol equivalent based on the dye present in the solution.

The preferred dye solutions of the present invention are acidic and preferably have a pH of 3 plus/minus one pH unit. Very particular preference is given to dye solutions having a pH of 3 plus/minus half a pH unit, the pH of the solution obtained being preferably adjusted to a value in the range from pH 2.9 to pH 3.1.

The present invention's storage-stable high-concentration solutions of dyes of the formula (I) may also comprise a plurality of dyes whose formulae come within the formula (I).

Preferred organic acids are acids of the formula A(-COOH)ₙ where A is C₁₋₁₂-alkanyl or C₁₋₁₂-alkenyl which may each be interrupted by nitrogen atoms and or oxygen atoms and which may each be additionally substituted by hydroxyl or NR'R" (where R' and R" are independently C₁₋₆-alkanyl or C₁₋₆-alkenyl or C₁₋₆-hydroxyalkanyl or C₁₋₆-hydroxyalkenyl, or unsubstituted phenyl or hydroxyl- or sulpho- or C₁₋₁₈-alkanyl-or C₁₋₁₈-alkenyl-substituted phenyl) and with n as a natural number of 1, 2 or 3. n is preferably = 1 or 2 and more preferably = 1.

Particular preference is given to formic acid, acetic acid, malonic acid, propionic acid, lactic acid, tartaric acid, benzoic acid, succinic acid. Acetic acid is the most preferred organic acid.

The preferred inorganic acids are the mineral acids and the inorganic oxoacids. Particular preference is given to halohydric acids (hydrochloric acid is particularly preferred), oxygen acids of the halogens (F, Cl, Br, I), oxygen acids of sulphur (but in particular sulphuric acid) and the oxygen acids of group 15 of the periodic table (in accordance with the 1985 IUPAC recommendation) (but in particular those derived from the elements nitrogen and phosphorus), but in particular hydrochloric acid, sulphuric acid, chloric acid, phosphoric acid and nitric acid, and phosphoric acid is very particularly preferred.

These acids will be present in a partially deprotonated (dissociated) state, as would be expected from their pK value and from the pH value of the dye solution.

Examples of preferred non-coloured anions are chlorides, bromides, sulphates, bisulphates, methosulphates, aminosulphonates, perchlorates, benzenesulphonates, oxalates, malonates, maleates, acetates, propionates, lactates, succinates, tartrates, malates, methanesulphonates and benzoates. But also complex anions such as for example zinc chloride double salts and anions of boric acid, citric acid, glycolic acid, diglycolic acid and adipic acid or addition products of orthoboric acid with polyalcohols having at least one cis diol group. These anions may of course also be exchanged, for example by means of ion exchangers or customary precipitation reactions. The ions can also be exchanged by diafiltration or ultrafiltration. The halides chloride and bromide are particularly preferred anions and chloride is most preferred.

In principle, the salts of the added organic and/or inorganic acids can likewise perform the anion function. In a particularly preferred embodiment, the anions are chlorides and the added acid is phosphoric acid.

The invention also provides a process for producing the concentrated storage-stable colour-stable aqueous liquid dye solutions characterized in that an aqueous solution or suspension of at least one crude cationic dye is membrane filtrated, using a semipermeable membrane, by applying a pressure to remove salts and synthesis by-products having molecular weights below 500 and some water. This process is performed until the chloride ion fraction is at most equimolar with regard to the dye.

In a preferred embodiment, the permeate is continuously or intermittently replaced or supplemented by water or buffer solution so that the volume of the batch changes only minimally, if at all. In other words, the dye concentration remains constant or substantially constant. The dye concentration of the permeate does not change by more than 20% in a preferred embodiment, by not more than 10 % in particularly preferred processes and by not more than 5% in very particularly preferred processes.

Following this diafiltration or ultrafiltration, the dye solution is brought to the desired concentration by concentrating.

The membranes used in the process of the present invention are TFM™ membranes, for example the G10, G20, G50 or DL5 membranes from GE Osmonics Desal (GE Osmonics Inc., 5951 Clearwater Drive, Minnetonka, Minnesota 55343, United States), of which the DL5 membrane is particularly preferred.

In a further, preferred version, the counterions of the cationic dye are exchanged, or further anions added, prior to diafiltration. The newly added anions mean that the original anions are easily removable through ultrafiltration or diafiltration. The counterions of the cationic functions are exchanged by halides in a particularly preferred embodiment and by chloride in a very particularly preferred embodiment.

The present invention further provides a process for the production of concentrated storage-stable colour-stable aqueous liquid dye solutions of cationic dyes by ultrafiltration of the aqueous solution or suspension of the crude dye.

The present invention further provides concentrated storage-stable colour-stable aqueous liquid dye solutions obtainable by the process of this invention.

Ultrafiltration or diafiltration of the reaction solution, which is obtained as per the examples of DE3715066, although the dyestuff is not isolated, can be used to render the reaction solution free of further, undesirable additions. Free of undesirable additions is to be understood as meaning in particular that, after ultrafiltration or diafiltration, the solutions comprise less than one% by weight and preferably less than 0.5% by weight of further materials. Undesirable further materials are in particular inert salts and electrolytes which, having been used to neutralize and/or salt out the dye, come from the synthesis stage and are carried along in the synthesis solution or suspension. Alkali metal or alkaline earth metal salts, for example ammonium, magnesium chloride, magnesium sulphate, magnesium bisulphate, sodium chloride, sodium sulphate, sodium bisulphate, potassium chloride, potassium sulphate or potassium bisulphate, especially sodium chloride, shall not be present in excess, i.e. in a larger amount than in an equimolar amount.

The preferred process of the present invention comprises the following steps:

A first step of ultrafiltration/diafiltration of the aqueous reaction solution, which contains 5% to 13% by weight of the substance of the formula (I), preferably 8% to 11% by weight, at a pH of between 5.5 and 6.5 and preferably 5.9 and 6.1, at a temperature of between 20 and 50 degrees Celsius and preferably between 30 and 35 degrees Celsius.

The ultrafiltration/diafiltration is preferably run at a continuously increasing temperature until not more than 35 degrees Celsius is reached. The ultrafiltration is carried out at a diafiltration rate of about 2, but at least until the chloride ion fraction is equimolar or somewhat less than equimolar. The ultrafiltration is preferably not carried out at temperatures above 35 degrees Celsius.

A further step comprises concentrating the solution to a concentration of not more than 40% by weight of the dye of the formula (I), but at least to 20% by weight of the dye of the formula (I). The concentrating rate is about 1.5 or up to the desired concentration. The concentrating is preferably carried out at a constant temperature between 30 and 35 degrees.

The pH is adjusted at the third step. Immediately following the diafiltration and concentration, the chloride ion fraction is adjusted to not more than the equimolar fraction, based on the dye molecule of the formula (I), by addition of hydrochloric acid. Thereafter, the pH is adjusted with an organic acid and/or an inorganic acid to pH 3 plus/minus one pH value, preferably to pH 3 plus/minus 0.5 pH value. The pH is most preferably adjusted to between pH 2.9 to pH 3.1. Preferred acids for adjusting the pH include the hereinabove mentioned inorganic and/or organic acids, but in particular the following acids: phosphoric acid, formic acid, acetic acid or lactic acid.

One of the acids mentioned can also be used to adjust the pH directly, without hydrochloric acid addition, in which case the required amount of the organic acid and/or inorganic acid is added. In principle, the organic acid can also be added before or during the ultrafiltration/diafiltration.

By preference the concentrated storage-stable colour-stable aqueous liquid dye solutions according to the invention are free or substantially free of dispersing agents other than the organic acids identified above.

As well as the water-soluble, organic acids identified, the dye solutions of the present invention may comprise biocides.

Any biocide is suitable. But preference is given to biocides having FDA approval. Any biocide capable of controlling the growth of Gram-positive or Gram-negative bacteria, yeasts or fungi can be used in the solutions of the present invention. Suitable biocides are for example 3-thiazolone derivatives, which are for example alkylated and/or chlorinated or used as mixtures. Typically, biocides are added in an amount of up to 0.15% by weight per ready-produced composition.

The concentrated solutions can also be diluted again with water before they are used for dyeing. The concentrated solutions can also be shaded with further dyes before use. But the concentrated solutions can also be used for shading other dyes.

Dyes especially useful for shading or for being shaded include all dyes which the Colour Index identifies as C.I. Basic Yellow or C.I. Basic Red or C.I. Basic Brown or C.I. Basic Blue or C.I. Basic Violet, and especially one or more of the following dyes can be used for shading: C.I. Basic Brown 23 or C.I. Basic Red 12 or C.I. Basic Blue 1 or C.I. Basic Red 14 or C.I. Basic Violet 10 or C.I. Basic Blue 26.

Dyes of the formula (II) and/or of the formula (III) are similarly useful for shading or for being shaded.

The concentrated solutions can also be used for shading brown dyes of the formula (II), or the concentrated solutions can be shaded with dyes of the formula (II).

The dyes of the formula (II) have the following structure: 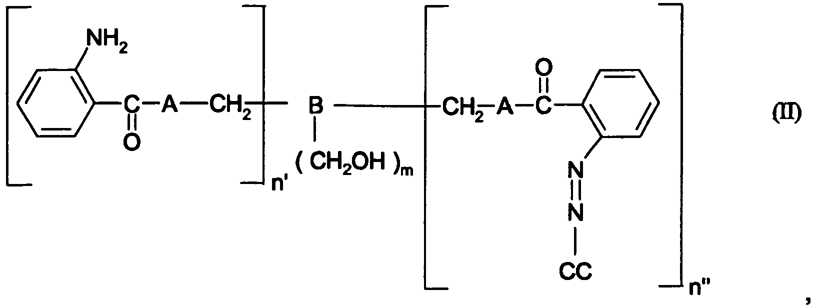 where
- each A: is independently -NH- or -O-,
- B: is a polyvalent group or atom,
- n' and n": are natural numbers and the sum total of n' and n" is ≥ 2,
- m: is a natural number ≥ 0, CC is a group having the formula (c₁) or (c₂) 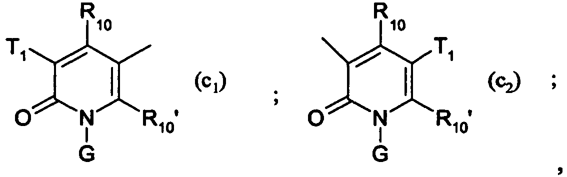
where
- each R₁₀: is independently H; C₁₋₄alkyl; C₅₋₆cycloalkyl; phenyl, benzyl or phenylethyl,
- each R₁₀': is independently H; -OH or C₁₋₄alkyl
- each T₁: is independently H; -CN; -COOR₁₅; CONR₁₆R₁₇; SO₂NR₁₆R₁₇; 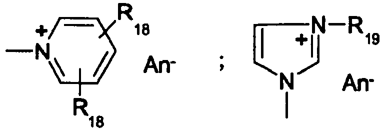 or 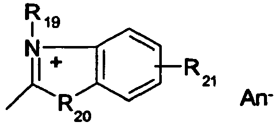
- G: is H; -R₁₁NHR₁₂ or -R₁₁NR₁₃R₁₄, where
- R₁₁: is C₁₋₆alkylene or C₂₋₆alkenylene, R₁₂ and R₁₃ are independently H; unsubstituted C₁₋₆alkyl; C₂₋₆alkyl substituted by OH, CN or halogen; phenyl-C₁₋₃alkyl, where the phenyl radical is optionally singly, doubly or triply substituted by substituents selected from the group consisting of chlorine, C₁₋₄alkyl or C₁₋₄alkoxy; unsubstituted C₅₋₆cycloalkyl or C₅₋₆cycloalkyl singly, doubly or triply substituted by C₁₋₄alkyl groups,
- R₁₄: has meaning as for R₁₂ or R₁₃ or a hydrogen atom,
- R₁₅: is C₁₋₆alkyl radical or phenyl-C₁₋₃alkyl radical,
- R₁₆ and R₁₇: are independently H or a C₁₋₄alkyl radical,
- R₁₈: is in each occurrence independently H; C₁₋₄alkyl radical; -NR₁₆R₁₇-(CH₂)₂₋₄-NR₁₆R₁₇ or -CONR₁₆R₁₇,
- R₁₉: is a C₁₋₄alkyl radical or a hydroxy-C₁₋₄alkyl radical,
- R₂₀: is -S- or -O-,
- R₂₁: is a hydrogen atom or a C₁₋₄alkyl radical and
- An⁻: is a non-coloured anion,
with the conditions that
(i) the sum total of n', n" and m is less than the number of valences of B,
(ii) when the sum total of n' and n" = 2, then m is ≥ 1,
(iii) when the sum total of n' and n" = 3 and A=NH, then m ≥ 1,
an organic acid and water.

The invention's storage-stable high-concentration solutions of dyes of the formula (II) may also comprise a plurality of different dyes whose formulae come within the formula (II).

In preferred dyes of the formula (II), T₁ is a substituent of the formula

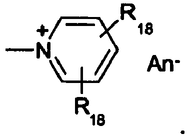

In more preferred dyes, the group CC is a substituent of the formula

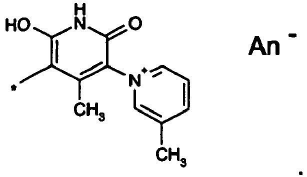

Preferably, B is a group B' C[(CH₂)₀₋₄]₁₋₄ or B is one of the groups -[-(CH₂)₁₋₄-O-(CH₂)₁₋₄]₄C or [-(CH₂)₁₋₃-O-(CH₂)₁₋₃-O-(CH₂)₁₋₃]₄C or [-(CH₂)₁₋₂-O-(CH₂)₁₋₂-O-(CH₂)₁₋₂-O-(CH₂)₁₋₂₁₄C or [(-CH₂)₁₋₄]2N(CH₂)₁₋₄N[(-CH₂)₁₋₄]₂. It is particularly preferable for B to be a carbon atom.

Particularly preferred compounds of the formula (II) have the formula (IIa) 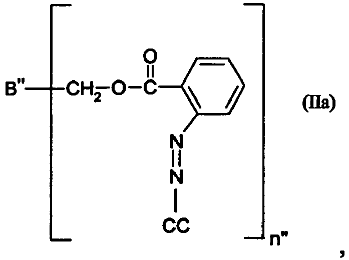 where
CC is a substituent of the formula (c₁) or (c₂) and
n" is 1, 2, 3 or 4, with to the conditions that
when n" = 1, then B" is C(CH₂OH)₃,
when n" = 2, then B" is C(CH₂OH)₂,
when n" = 3, then B" is C(CH₂OH),
when n" = 4, then
B" is C; [-(CH₂)₁₋₄-O-(CH₂)₁₋₄]₄C; [-(CH₂)₁₋₃-O-(CH₂)₁₋₃-O-(CH₂)₁-₃]₄C; [-(CH₂)₁₋₂-O-(CH₂)₁₋₂-O-(CH₂)₁₋₂-O-(CH₂)₁₋₂]₄C or [(-CH₂)₁₋₄]₂N(CH₂)₁₋₄N[(-CH₂)₁₋₄]2.

Very particular preference is given to compounds of the formula (IIa) where CC is a substituent of the formula (c₁) or (c₂) and
n" is 1, 2, 3 or 4, with to the conditions that
when n" =1, then B" is C(CH₂OH)₃
when n" = 2, then B" is C(CH₂OH)₂,
when n" = 3, then B" is C(CH₂OH),
when n" = 4, then B" is C.

The concentrated solutions can also be used for shading brown dyes of the formula (III), or the concentrated solutions can be shaded with dyes of the formula (III).

The dyes of the formula (III) have the following structure: 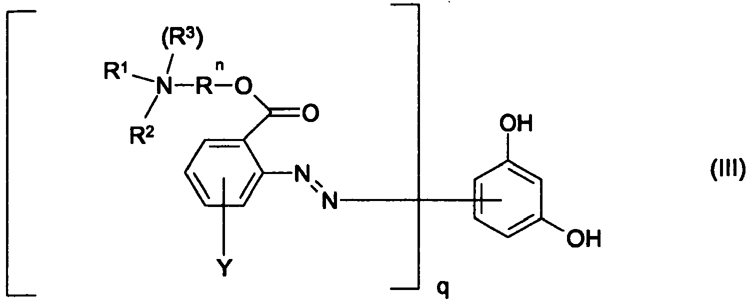 where
- R¹, R² or R³: are independently H, CH₃, C₂H₅, n-C₃H₇, i-C₃H₇, n-C₄H₉, i-C₄H₉, sec-C₄H₉,
- Rⁿ: is -C₂H₄-, -C₃H₆-, -CH(CH3)CH₂- or -C₄H₆-
- Y: is hydrogen or nitro,
- q: is 1 or 2.

The dyes of the formula (II) are known and can be prepared as described in WO02/062902. The dyes of the formula (III) are known and can be prepared as described in EP162409 or EP1352928.

Shading can be effected in the ratios of 2% to 98% by weight (based on the dye) of a dye of the formula (I) and 98% to 2% by weight (based on the dye) of a shading dye, i.e. for example in the ratios 2.0 / 98.0; 2.5 / 97.5; 12.5 / 87.5; 22.5 / 77.5; 32.5 / 67.5; 42.5 / 57.5; 50.0 / 50.0; 57.5 / 42.5; 67.5 / 32.5; 77.5 / 22.5; 80.0 / 20.0; 87.5 / 12.5; 90.0 /10.0; 95.0 / 5.0; 97.5 / 2.5; or 98.0 / 2.0.

The concentrated dye solutions of the present invention are used in particular, if appropriate after dilution with water, for dyeing and printing paper, including board and card, these materials being dyeable for example in the pulp, by coating or by dipping. In addition, such a liquid formulation can also be used for a continuous or batch dyeing process for textile materials, especially cellulose. The concentrated dye solutions of the present invention can be used as a base for producing inkjet inks or other inks and combinations for the non-impact printing of substrates such as paper or textiles. The formulations of the present invention can also be used without further modification for the non-impact printing of substrates such as paper or textiles.

The dye preparations of the present invention can also be used for dyeing and tinting wood. The wood can be in the form of articles, such as bowls, dishes, toys, but also solid slats and beams, and also in the form of shavings, chips or chipboard. Parts of buildings can similarly be treated with the dye preparations of the present invention, as can furniture. The application of the liquid dye preparations of the present invention can be utilized for equalizing colour differences in the wood or in a veneer, but also for completely changing the colour of the wood or of a veneer. The liquid dye preparations of the present invention can be utilized as an aqueous stain (in which case water is the main solvent), as an alcoholic-aqueous stain (i.e. the solvent is an alcohol-water mixture) or as stains involving organic solvents (about 30-95% of organic solvents; such stains may also possibly be water thinnable).

The examples which follow illustrate the invention. Parts and %ages are by weight, unless stated otherwise.

### Preparation Example A1

30 parts of 4-aminoacetanilide are conventionally diazotized at 0-5°C and coupled at pH 1.3 to 2.1 onto 57.4 parts of 6-hydroxy-4-methyl-1-(3'-dimethylamino)propyl-3-pyridinio-2-pyridone betaine base. The acetyl group is detached at the boil by addition of 50 parts of 30% hydrochloric acid and the solution is subsequently cooled down to room temperature = solution 1 (about 670 parts).

91 parts of 3-aminoacetanilide are conventionally diazotized at 0-5°C and coupled at pH 1.3 to 2.1 with 174 parts of 6-hydroxy-4-methyl-1-(3'-dimethylamino)propyl-3-pyridinio-2-pyridone betaine base. The acetyl group is detached under reflux by addition of 160 parts of 30% hydrochloric acid and the solution is subsequently cooled down to room temperature = solution 2 (about 1800 parts).

Solution 1 is then diazotized at 0-5°C by known methods, followed by solution 2 being diazotized at 0-5°C by known methods, and subsequently the two diazonium solutions are combined. 44 parts of resorcinol are added and the pH is adjusted to about 7 with 30% aqueous sodium hydroxide solution. The coupling ends after 2-3 hours, leaving about 4000 parts of a brown dye solution containing about 400 parts of the dye of the formula

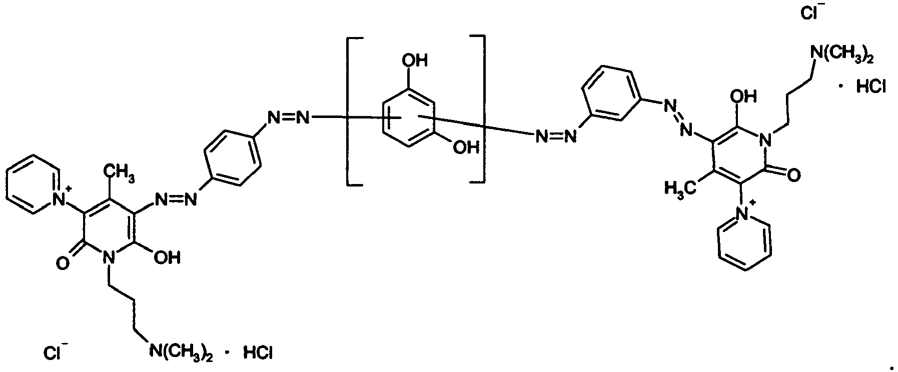

The conversion into a storage-stable and colour-stable solution is done as follows. The solution is adjusted to an accurate pH between 5.9 and 6.1 (either with hydrochloric acid or with aqueous sodium hydroxide solution), while the temperature of the solution is maintained between 10 and 20°C. Lastly, the temperature is allowed to rise (i.e. raised by a little heating) to between 30 and 35°C and a start is made on the diafiltration, for which the temperature must not exceed 35°C. To this end, the dye solution is diafiltered in a laboratory ultrafiltration system equipped with a DL5 membrane at a temperature of between 30 and 35°C and a pressure of 15 bar until the conductivity in the permeate remains constant, i.e. the chloride ion fraction has decreased to between 10% and 12% based on the dye molecule, which corresponds to a substantially equimolar chloride ion content. Althewhile, the volume is kept substantially constant The retentate is concentrate at a pressure of 12 to 15 bar, hydrochloric acid is used to adjust the chloride ion content to 13%, based on the dye molecule with the molar mass 1090, in the form of the HCl/chloride salt, and the pH decreases to about 3.3. The pH is then accurately adjusted (buffered) to 3 (2.9-3.1) by addition of acetic acid to obtain a solution having a total dye content of about 20% by weight, that is stable in storage and does not undergo any hue change even during prolonged storage periods, i.e. is colour stable. This storage-stable and colour-stable solution dyes wood-containing paper in brown shades.

### Preparation Example A2

### 22.1 parts of (¹/₂₀ mol) of the compound of formula

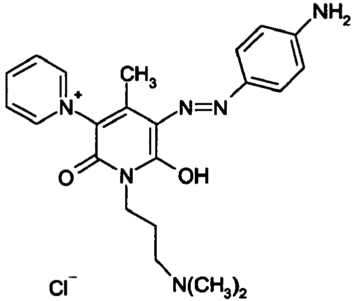

are diazotized at 0 - 5°C with 3.45 parts of sodium nitrite (¹/₂₀ mol) in a hydrochloric acid medium and coupled at a pH of 1 - 3 onto 5.4 parts of 1,3-diaminobenzene (¹/₂₀ mol) to obtain the dye of the formula (A2a)

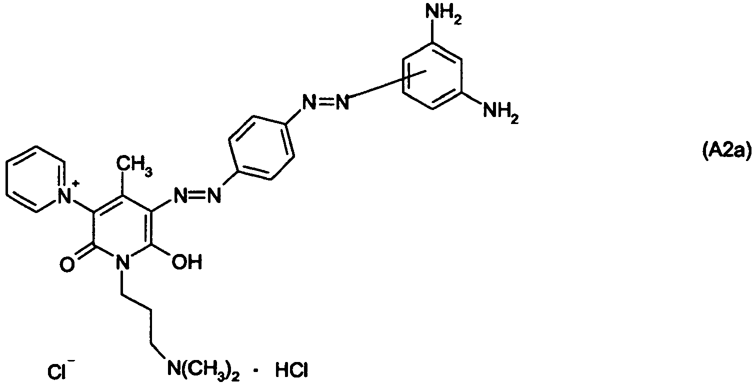

Coupling 26.1 parts (¹/₂₀ mol) of the diazonium salt of the compound of the formula (A2b) 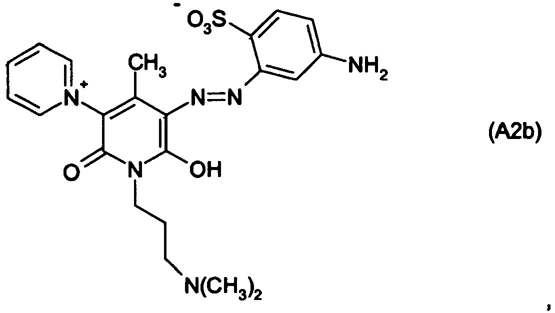 prepared by known methods by diazotization and coupling of 1-amino-3-acetyl-aminobenzene-6-sulphonic acid onto pyridone and subsequent saponification, onto the dye of the formula (A2a) provides an isomer mixture of the dye of the formula:

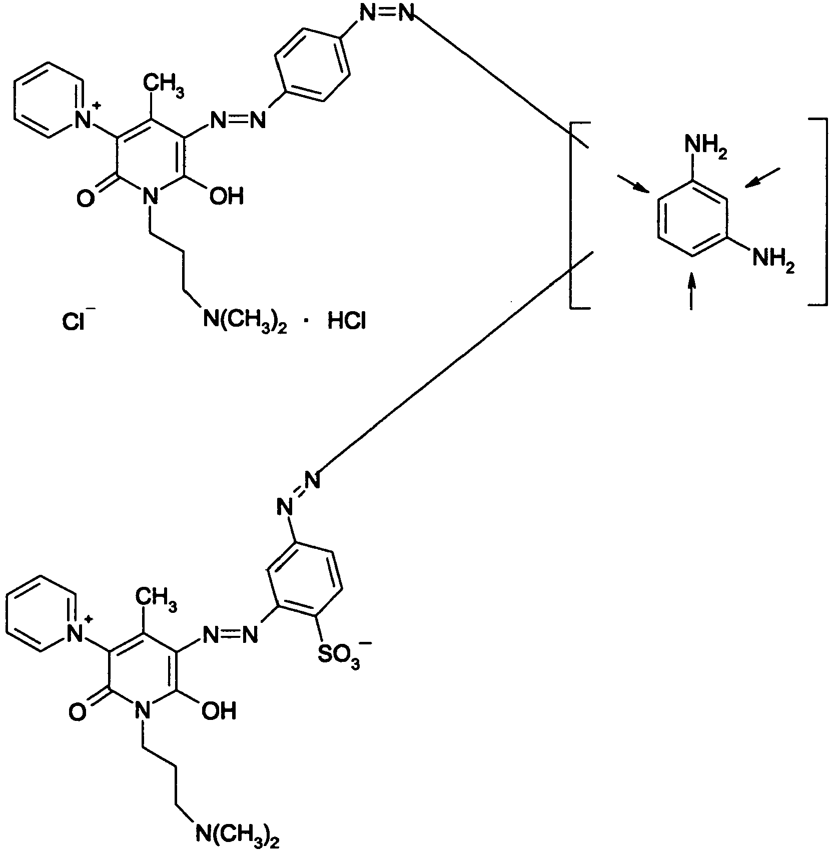

(The possible coupling sites are marked by arrows).

This isomer mixture dyes wood-containing paper in brown shades. A storage-stable and colour-stable solution is prepared from this isomer mixture similarly to Preparation Example A1.

Table I below indicates the constitutional construction of further dyes preparable according to Preparation Example A2. These dyes too were prepared similarly to Preparation Example A1 or A2 and purified and converted into storage-stable liquid formulations according to Preparation Example A1. The storage-stable liquid formulations thus obtained dye paper in brown shades. They conform to the formula A2c: 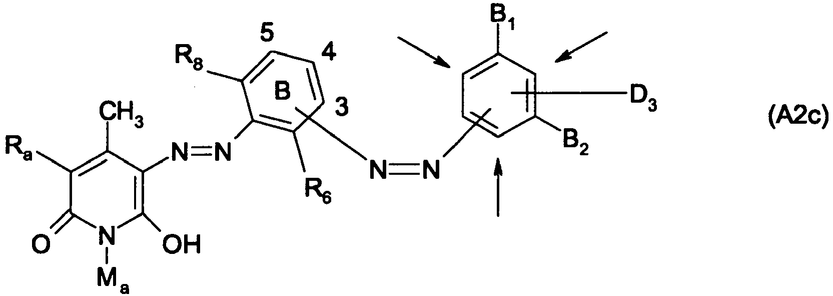 where B₁ and B₂ are independently -OH and NH₂ and D₃ = H or a residue of the formula

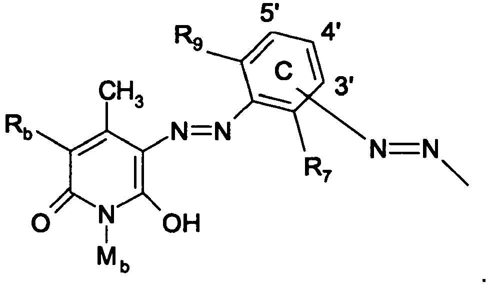

**Table for Mₐ and M_{b}**

| | |
|---|---|
| M₁ | H |
| M₂ | -(CH₂)₃)N(CH₃)₂ |
| M₃ | -(CH₂)₂)N(CH₂CH₃)₂ |
| M₄ | 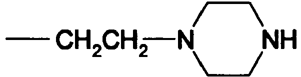 |
| M₅ | 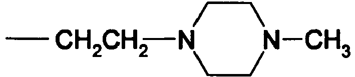 |
| M₆ | 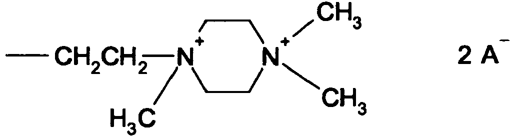 |
| M₇ | 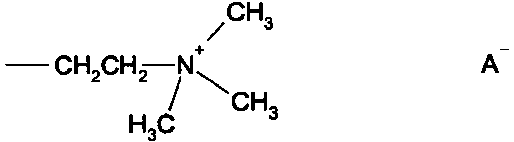 |
| M₈ | 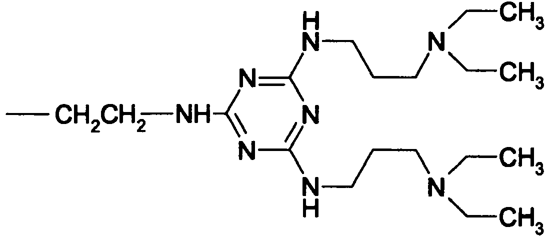 |
| M₉ | 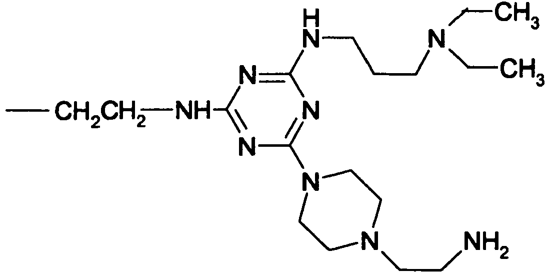 |
| M₁₀ | -(CH₂)₂)NH₂ |

**Table for Rₐ and R_{b}**

| | |
|---|---|
| **R₁** | **H** |
| **R₂** | 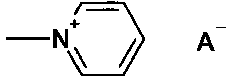 |
| **R₃** | 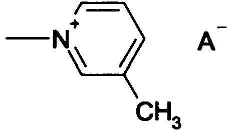 |
| **R₄** | CN |
| **R₅** | 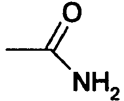 |

**Table I**

| **Ex. No.** | **Rₐ** | **Mₐ** | **R₆** | **R₈** | **Position of azo bridge 1 in ring B** | **H or D₃** | **R_{b}** | **M_{b}** | **R₇** | **R₉** | **Position of azo bridge in ring C** | **B₁** | **B₂** |
|---|---|---|---|---|---|---|---|---|---|---|---|---|---|
| A3 | R₂ | M₂ | SO₃H | H | 3 | H | - | - | - | H | - | OH | OH |
| A4 | R₂ | M₂ | SO₃H | H | 4 | H | - | - | - | H | - | OH | NH₂ |
| A5 | R₂ | M₂ | SO₃H | H | 4 | H | - | - | - | H | - | CH₂ | NH₂ |
| A6 | R₂ | M₂ | SO₃H | H | 3 | D₃ | R₂ | M₂ | SO₃H | H | 3' | NH₂ | NH₂ |
| A7 | R₂ | M₂ | SO₃H | H | 3 | D₃ | R₂ | M₂ | H | H | 4' | NH₂ | NH₂ |
| A8 | R₂ | M₂ | SO₃H | H | 3 | D₃ | R₂ | M₂ | H | H | 4' | NH₂ | NH₂ |
| A9 | R₂ | M₂ | SO₃H | H | 3 | D₃ | R₂ | M₂ | H | H | 4' | NH₂ | OH |
| A10 | R₂ | M₂ | SO₃H | H | 3 | D₃ | R₂ | M₂ | H | H | 4' | OH | OH |
| All | R₂ | M₂ | SO₃H | H | 4 | D₃ | R₂ | M₂ | H | H | 3' | NH₂ | NH₂ |
| A12 | R₃ | M₁ | H | H | 3 | D₃ | R₂ | M₂ | SO₃H | H | 4' | NH₂ | NH₂ |
| A13 | R₁ | M₄ | H | H | 3 | D₃ | R₂ | M₅ | SO₃H | H | 4' | OH | NH₂ |
| A14 | R₄ | M₄ | H | H | 3 | D₃ | R₂ | M₆ | SO₃H | H | 4' | NH₂ | NH₂ |
| A15 | R₅ | M₄ | H | H | 3 | D₃ | R₂ | M₇ | SO₃H | H | 4' | NH₂ | NH₂ |
| A16 | R₂ | M₂ | SO₃H | H | 4 | D₃ | R₂ | M₂ | H | H | 3' | OH | NH₂ |
| A17 | R₂ | M₂ | SO₃H | H | 4 | D₃ | R, | M₂ | H | H | 3' | OH | OH |
| A18 | R₂ | M₈ | SO₃H | H | 4 | D₃ | R₂ | M₁ | H | H | 3' | OH | OH |
| A19 | R₂ | M₈ | SO₃H | H | 4 | D₃ | R₂ | M₂ | H | H | 3' | OH | NH₂ |
| A20 | R₂ | M₈ | H | H | 4 | D₃ | R₂ | M₄ | SO₃H | H | 3' | NH₂ | NH₂ |
| A21 | R₂ | M₉ | H | H | 4 | D₃ | R, | M₅ | SO₃H | H | 3' | OH | NH₂ |
| A22 | R₂ | M₉ | H | H | 3 | D₃ | R₄ | M₃ | SO₃H | H | 4' | ₀H | OH |
| A23 | R₂ | M₈ | H | H | 3 | D₃ | RS | M₄ | SO₃H | H | 4' | NH₂ | NH₂ |
| A24 | R₂ | M₃ | H | H | 4 | D₃ | R₃ | M₃ | SO₃H | H | 3' | Nil, | NH₂ |
| A25 | R₂ | M₂ | H | CH₃ | 3 | D₃ | R₂ | M₂ | SO₃H | H | 4' | OH | OH |
| A26 | R₂ | M₃ | H | CI | 3 | D₃ | R₂ | M₃ | SO₃H | H | 4' | NH₂ | NH₃ |
| A27 | R₂ | M₂ | H | OCH₃, | 3 | D₃ | R₂ | M₄ | SO₃H | H | 4' | NH₂ | NH₂ |
| A28 | R₂ | M₇ | SO₃H | H | 4 | D₃ | R₂ | M₇ | H | Cl | 3' | OH | OH |
| A29 | R₂ | M₈ | SO₃H | H | 4 | D₃ | R₂ | M₂ | H | CH₃ | 3' | OH | NH₂ |
| A30 | R₂ | M₆ | SO₃H | H | 4 | D₃ | R, | M₂ | H | OCH₃ | 3' | NH₂ | NH₂ |
| A31 | R₂ | M₂ | SO₃H | H | 3 | D₃ | R₂ | M₂ | H | H | 3' | OH | NH₂ |
| A32 | R₂ | M₂ | SO₃H | H | 4 | D₃ | R₂ | M₂ | H | H | 4' | NH₂ | NH₂ |
| A33 | R₂ | M₂ | SO₃H | H | 4 | D₃ | R₂ | M₂ | SO₃H | H | 4' | NH₂ | NH₂ |
| A34 | R₂ | M₂ | SO₃H | H | 3 | D₃ | R₂ | M₂ | H | H | 3' | NH₂ | NH₂ |
| A33 | R₂ | M₂ | SO₃H | H | 4 | D₃ | R₂ | M₂ | H | H | 4' | NH₂ | OH |
| A34 | R₂ | M₂ | SO₃H | H | 3 | D₃ | R₂ | M₂ | SO₃H | H | 4' | OH | NH₂ |
| A35 | R₂ | M₁₀ | SO₃H | H | 3 | D₃ | R₂ | M₂ | H | H | 3' | OH | OH |

### Preparation Example A36

425 parts of isatoic anhydride are added gradually at 50°C to a mixture of 118 parts of pentaerythritol and 8.7 parts of sodium carbonate in 434 parts of N,N-dimethyl-acetamide. The suspension is stirred for 2 hours and diluted with 4340 parts of water. This is followed by filtration, washing with water and drying at 60°C under reduced pressure to obtain a white powder which is a mixture consisting of 4 components having the formulae (36a, 36b, 36c, 36d):

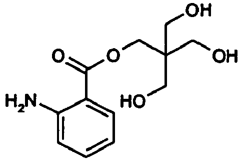

### Component 36a

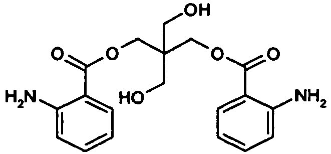

### Component 36b

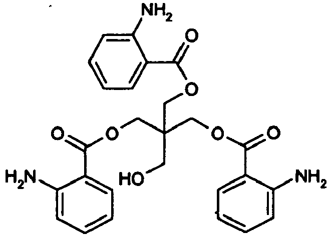

### Component 36c

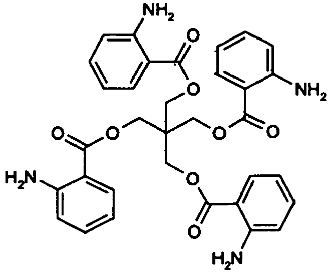

### Component 36d

### Preparation Example A37

434 parts of the amino components of Example A36 are added to a mixture of 1736 parts of ice, 781 parts of 30% HCl, 694 parts of acetic acid and 260 parts of N,N-dimethylacetamide and are diazotized with 182 parts of a 4 N sodium nitrite solution. The temperature is maintained at 0 - 5°C by addition of 870 parts of ice. To the diazo solution obtained are added 3281 parts of an approximately 20% aqueous solution of 6-hydroxy-4-methyl-3-pyridonyl-3'-methylpyridinium chloride. The pH is adjusted to 3 at a temperature of 10 - 20°C by addition of 130 parts of 30% sodium hydroxide solution. After subsequent stirring for 1 hour, 50 parts of Hyflo-Supercel filter earth are added before filtration through a porcelain suction filter with absorbent pad. The clear dye solution obtained (9700 g; 8900 ml) is diafiltered in a laboratory ultrafiltration system having a DL5 membrane at 40 - 45°C and a pressure of 15 bar until the conductivity in the permeate stays constant. In the process, the volume is kept substantially constant. This required about 33 000 parts (ml) of demineralized water. The pH is maintained at 4.0 - 4.5 during the ultrafiltration by addition of acetic acid. The retentate is concentrated at a pressure of 12 - 15 bar to 5180 parts (g) and then admixed with 140 parts of acetic acid to obtain a solution having a total dye content of about 20% by weight, consisting of the components having the formulae (37a, 37b, 37c, 37d):

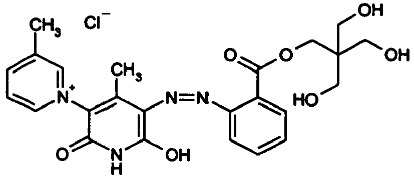

### Component 37a

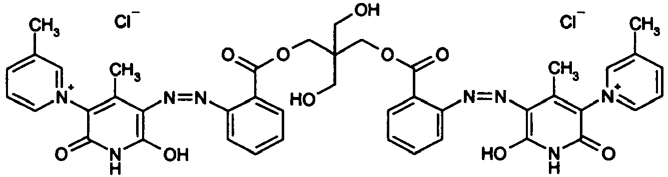

### Component 37b

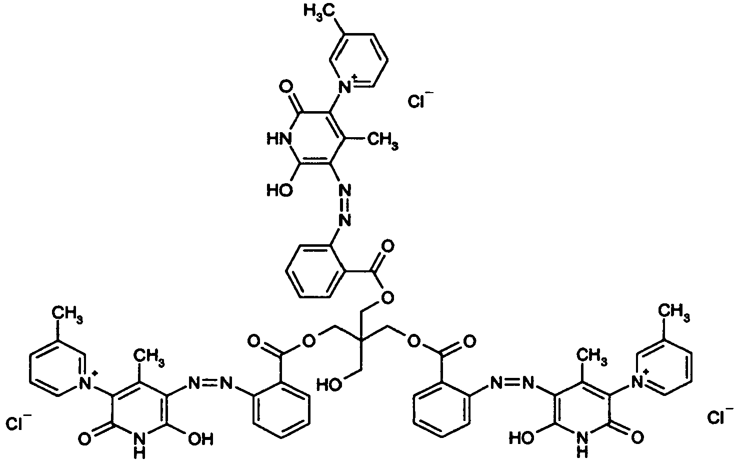

### Component 37c

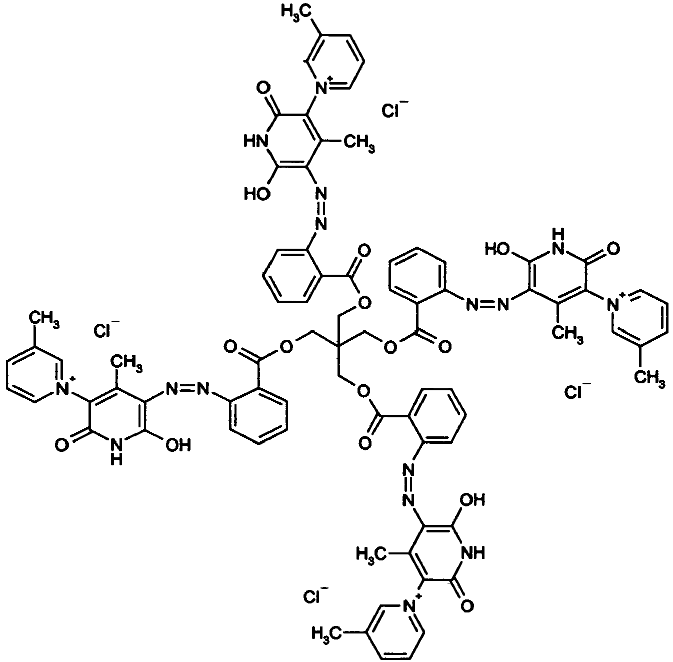

### Component 37d

This solution (20.7% dye as chloride, 5.5% of acetic acid, 73.8% of water) dyes paper in a brilliant yellow hue (λ_{max.} = 423 nm in dimethylformamide/water), the concentrated solution being dilutable if necessary. The dyeings obtained have excellent wet fastnesses (to plain water, alcohol, milk, soapy water, acetic acid, urine, etc.)

### Preparation Example A38

Preparation of the diazo component: to 326 parts of isatoic anhydride in 1000 parts of dioxane are added dropwise 187 parts of dimethylaminoethanol at 60°C. Subsequent stirring for 1 hour is followed by concentrating in a water jet vacuum and distilling in a fine vacuum. 402 parts of 2'-dimethylaminoethyl anthranilate pass over at 160°C / 0.1 Torr.

21 parts of 2'-dimethylaminoethyl anthranilate are dissolved in a mixture of 50 parts of water, 25 parts of glacial acetic acid and 30 parts of concentrated hydrochloric acid and, after cooling to 5°C, admixed with 34.6 parts of a 23% aqueous solution of sodium nitrite added dropwise. After three hours, excess nitrite is destroyed by addition of sulphamic acid. A solution of 11 parts of resorcinol in 30 parts of warm water is then added, the pH is raised with sodium acetate to pH 5 and the batch is stirred at room temperature overnight After cooling to 0°C, the batch is gradually adjusted to pH 7 with 5N caustic soda. After 4 hours, the dye obtained is through crystallized and can be filtered off with suction and washed with water. Air drying yields 22 g of dye powder. The dye can be dissolved with glacial acetic acid and water to form a stable 20% liquid formulation. The dye dyes paper in a yellow hue. The hue is No. 4 on the Colour Index Hue Indication Chart. The effluent is only minimally coloured. The dyed papers can be bleached by means of hydrosulphite. The dissolved compound conforms to the formula

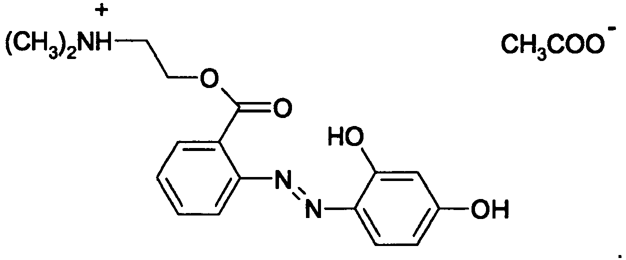

### Preparation Example A39

Preparation of the diazo component: to 326 parts of isatoic anhydride in 1000 parts of dioxane are added dropwise 187 parts of dimethylaminoethanol at 60°C. Subsequent stirring for 1 hour was followed by solvent removal in a vacuum and distilling 402 parts of 2'-dimethylaminoethyl anthranilate over at 160°C/0.1 Torr.

275 parts of 2'-dimethylaminoethyl anthranilate were dissolved in a mixture of 190 parts of water and 230 parts of methanesulphonic acid and, after cooling to 5°C, admixed with 150 parts of a 40% aqueous solution of sodium nitrite added dropwise. After 3 hours, excess nitrite was destroyed by addition of sulphamic acid. A solution of 44 parts of resorcinol in 160 parts of water was then added, and the batch was raised to pH 5 with sodium acetate and subsequently stirred at room temperature for about 12 h to form a homogeneous solution. The dissolved dye conforms to the formula:

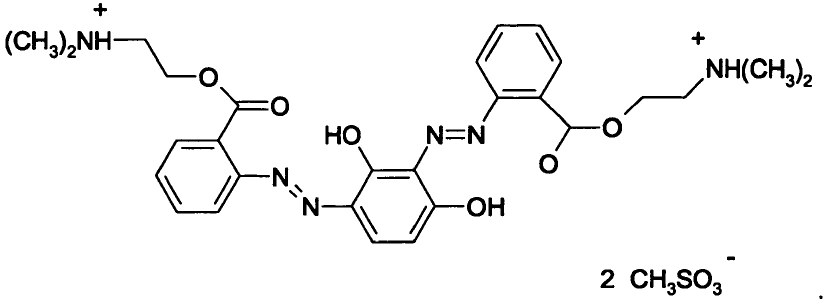

### Preparation Example 3

1.25 kg of the dye solution of Preparation Example A1 are mixed with 7.75 kg of an approximately 10% liquid formulation of the dye of Preparation Example A1 at RT (= room temperature). This gives a stable dye solution which dyes paper in a yellowish brown hue (λₘₐₓ. = 433 nm in water/acetic acid).

### Preparation Example 4

4.2 kg of the dye solution of Preparation Example A1 are mixed with 2.5 kg of the dye solution of Preparation Example A36 at RT. The stable dye solution obtained dyes paper in a reddish yellow hue (λ_{max.} = 450 nm in water/acetic acid).

### Preparation Example 5

4.2 kg of the dye solution of Preparation Example A1 are mixed with 2.5 kg of the dye solution of Preparation Example A37 at RT. The stable dye solution obtained dyes paper in a reddish yellow hue (λ_{max.} = 450 nm in water/acetic acid).

### Dyeing prescriptions

### Dyeing prescription A

70 parts of chemically bleached pinewood sulphite cellulose and 30 parts of chemically bleached birchwood sulphite cellulose are beaten into 2000 parts of water in a hollander. 1.5 parts of the liquid dye preparation of Preparation Example A1 are added to this stock. Paper is made therefrom after a mixing time of 20 minutes. The absorbent paper obtained in this way has a brown colour.

### Dyeing prescription B

1.5 parts of the liquid dye preparation of Preparation Example A1 are added to 100 parts of chemically bleached sulphite cellulose beaten with 2000 parts of water in a hollander. After mixing through for 15 minutes, customary sizing is effected using resin size and aluminium sulphate. Paper made from this material exhibits a brown hue in each case.

### Dyeing Prescription C

An absorbent web of unsized paper is pulled at 40-50°C through an aqueous dye solution consisting of 95 parts of water and 5 parts of the inventive dye solution of Preparation Example A1.

The excess dye solution is squeezed off by two rolls. The dried web of paper has a brown colour in each case.

The dye preparations of Preparation Examples A2-A35 can be used for dyeing similarly to Prescriptions A to C.

### Dyeing Prescription D

5 parts of the dye preparation of Preparation Example A1 are metered into 4000 parts of softened water at room temperature. 100 parts of prewetted woven cotton fabric are introduced into the bath, followed by heating to the boil over 30 minutes. The bath is held at the boil for an hour during which evaporated water is replaced from time to time. The dyeing is then removed from the liquor, rinsed with water and dried. The dyeing obtained has a brown colour.

The dye preparation of Preparation Examples A2-A35 can be used for dyeing cotton in a similar manner.

### Dyeing Prescription E

100 parts of freshly tanned and neutralized chrome grain leather are drummed for 30 minutes in a float of 250 parts of water at 55°C and 0.5 part of the dye preparation made according to Preparation Example A1 and are treated for a further 30 minutes in the same bath with 2 parts of anionic fatliquor based on sulphonated fish oil. The leathers are conventionally dried and finished. The leather obtained has a level yellowish brown hue.

Further low-affinity, vegetable-retanned leathers can likewise be dyed according to known methods.

Dyeing can be done in a similar manner with dyes of Preparation Examples A2-A35.

### Use Example F

15 kg of wastepaper (woody), 25 kg of bleached groundwood and 10 kg of unbleached sulphate pulp were beaten in a pulper to form a 3% aqueous pulp suspension. The pulp suspension was diluted to 2% in a dyeing vat. This suspension was then admixed in succession with 5% of kaolin and 1.25 kg of a 5% acetic acid solution of the dye of Preparation Example A1, reckoned on dry total fibre, by stirring. After 20 minutes the pulp in the mixing vat is admixed with 1% (based on absolutely dry fibre) of a resin size dispersion. The homogeneous pulp suspension was adjusted with alum to pH 5 on the paper machine just upstream of the headbox. The paper machine was used to produce an 80 g/m² brown bag paper with a machine finish.

Dyeing can be done in a similar manner with dyes of Preparation Examples A2 - A35.

### Use Example G

A dry stock containing 60% groundwood and 40% unbleached sulphite pulp is beaten with sufficient water and ground to 40 SR freeness in a hollander for the dry content to be just above 2.5% and then adjusted with water to a dry content of exactly 2.5% for the high-density pulp.

200 parts of this high-density pulp are admixed with 5 parts of a 0.25% aqueous solution of the dye of Preparation Example A1, stirred for about 5 min., admixed with 2% of resin size and 4% of alum, based on dry stock, and again stirred for some minutes until homogeneous. The material is diluted with about 500 parts of water to 700 parts by volume and used in a known manner to prepare sheets of paper by drainage on a sheet-former. These sheets of paper have an intense brown colour.

Dyeing can be done in a similar manner with dyes of Preparation Examples A2 - A35.

### Use Example H

An ink composition for inkjet printing consists of

| | |
|---|---|
| 6 parts | of the dye of Preparation Example A1, |
| 20 parts | of glycerol and |
| 74 parts | of water. |

This ink composition was then used for printing paper, papery substrates, textile fibre materials and plastic film/sheet by transferring the ink into the ink receptacle of a commercially available inkjet printer and using it to produce a single-coloured test print on the identified sheetlike materials.

### Dyeing can be done in a similar manner with dyes of Preparation Examples A2 - A35.

### Use Example I

A roof batten composed of Norway spruce and a roof batten composed of beechwood are sawn into pieces 5 cm in length and one piece of the sprucewood roof batten and one piece of the beechwood roof batten are dipped into a dilute solution of the dye solution according to Preparation Example 1 (10 parts by weight of water and 1 part by weight of dye solution according to Preparation Example 1). Brownish roof batten pieces are obtained on drying.

Dyeing can then be done in a similar manner with dyes of Preparation Examples A2-A35.

## Claims

1. Concentrated storage-stable colour-stable aqueous liquid dye solutions comprising
(i) one or more cationizable dyes of the formula (I): 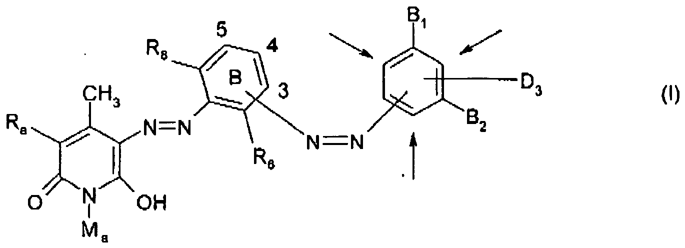 where B₁ and B₂ are independently -OH and NH₂ and D₃ = H or a radical of the formula 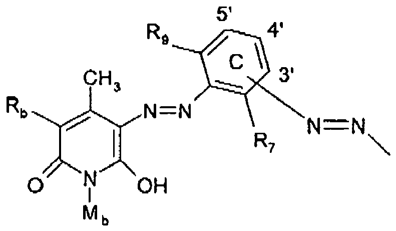 and
R₆, R₇, R₈ or R₉ are independently H or -SO₃H and
Mₐ or M_{b} independently have the meanings of M₁ to M₁₀, where
M₁ is H,
M₂ is -(CH₂)₃)N(CH₃)₂,
M₃ is -(CH₂)₂)N(CH₂CH₃)₂,
M₄ is 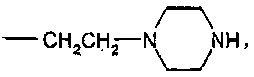
R₃ is 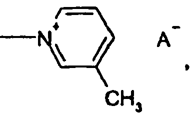
R₄ is CN, R₅ is 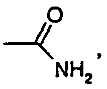
where A⁻ is a non-coloured anion which is the anion of an organic acid and/or the anion of an inorganic acid
(ii) an organic acid and
(iii) water and
(iv) having an at most equimolar chloride ion fraction based on the dye present in the solution,
wherein 1 the dye solutions contain from 10 up to 40% by weight of dye, from 0.5% to 25% by weight of the organic acid.

2. Concentrated storage-stable colour-stable aqueous liquid dye solutions according to Claim 1 **characterized in that** they have a pH of 3 plus/minus one pH unit.

3. Concentrated storage-stable colour-stable aqueous liquid dye solutions according to Claim 1 or 2 **characterized in that** the solution further comprises a dye of the formula (II) and/or a dye of the formula (III) 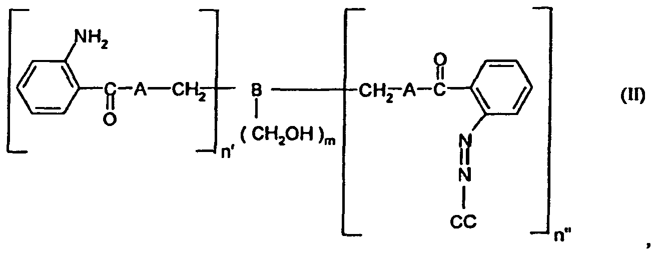 where
each A is independently -NH- or -O-,
M₅ is 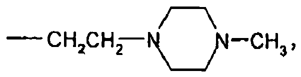
M₆ is 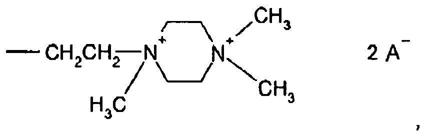
M₇ is 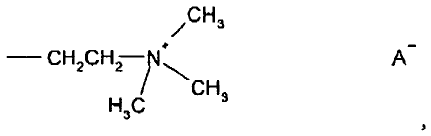
M₈ is 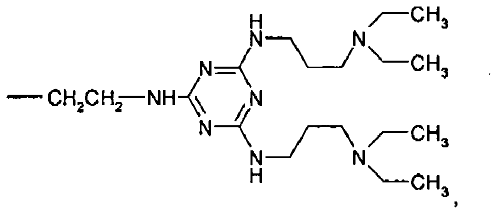
M₉ is 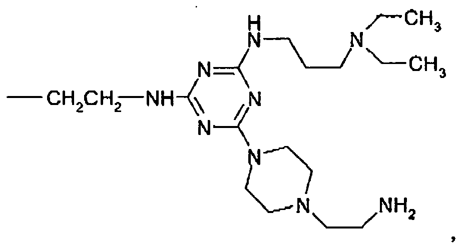 M₁₀ is -(CH₂)₂NH₂
and
Rₐ or R_{b} independently have the meanings of R₁ to R₅
R₁ is H,
R₂ is 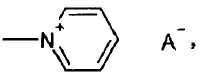
B is a polyvalent group or atom,
n' and n" are natural numbers and the sum total of n' and n" is ≥ 2,
m is a natural number ≥ 0,
CC is a group having the formula (c₁) or (c₂) 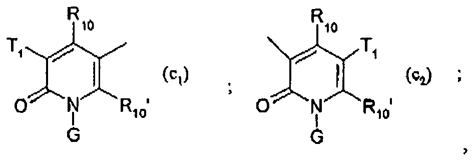
where
each R₁₀ is independently H; C₁₋₄alkyl; C₅₋₆cycloalkyl; phenyl, benzyl or phenylethyl,
each R₁₀' is independently H; -OH or C₁₋₄alkyl
each T₁ is independently H; -CN; -COOR₁₅; CONR₁₆R₁₇; SO₂NR₁₆R₁₇; 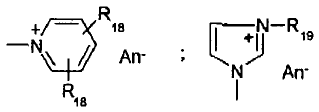 or 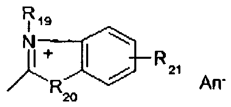
G is H; -R₁₁NHR₁₂ or -R₁₁NR₁₃R₁₄, where
R₁₁ is C₁₋₆alkylene or C₂₋₆alkenylene,
R₁₂ and R₁₃ are independently H; unsubstituted C₁₋₆alkyl; C₂₋₆alkyl substituted by OH, CN or halogen; phenyl-C₁₋₃alkyl, where the phenyl radical is optionally singly, doubly or triply substituted by substituents selected from the group consisting of chlorine, C₁₋₄alkyl or C₁₋₄alkoxy; unsubstituted C₅₋₆cycloalkyl or C₅₋₆cycloalkyl singly, doubly or triply substituted by C₁₋₄alkyl groups,
R₁₄ has meaning as for R₁₂ or R₁₃ or a hydrogen atom,
R₁₅ is C₁₋₆alkyl radical or phenyl-C₁₋₃alkyl radical,
R₁₆ and R₁₇ are independently H or a C₁₋₄alkyl radical,
R₁₈ is in each occurrence independently H; C₁₋₄alkyl radical; -NR₁₆R₁₇-(CH₂)₂₋₄-NR₁₆R₁₇ or -CONR₁₆R₁₇,
R₁₉ is a C₁₋₄alkyl radical or a hydroxy-C₁₋₄alkyl radical,
R₂₀ is -S- or -O-,
R₂₁ is a hydrogen atom or a C₁₋₄alkyl radical and
An⁻ is a non-coloured anion,
with the conditions that
(i) the sum total of n', n" and m is less than the number of valences of B,
(ii) when the sum total of n' and n" = 2, then m is ≥ 1,
(iii) when the sum total of n' and n" = 3 and A=NH, then m ≥ 1,
and/or 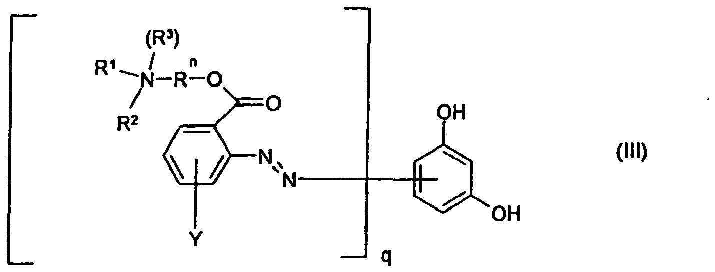 where
R¹, R² or R³ are independently H, CH₃, C₂H₅, n-C₃H₇, i-C₃H₇, n-C₄H₉, i-C₄H₉, sec-C₄H₉,
Rⁿ is -C₂H₄-, -C₃H₆-, -CH(CH3)CH₂- or -C₄H₆-
Y is hydrogen or nitro,
q is 1 or 2.

4. Process for producing the concentrated storage-stable colour-stable aqueous liquid dye solutions according to Claim 1 **characterized in that** an aqueous solution or suspension of at least one crude cationic dye of the formula (I) is membrane filtrated, using a semipermeable membrane, [wherein the ultrafiltration/diafiltration is run at a continuously increasing temperature until not more than 35 degrees Celsius is reached] by applying a pressure to remove salts and synthesis by-products having molecular weights below 500 and some water until the chloride ion fraction is at most equimolar with regard to the dye of the formula (I).

5. Process for producing the concentrated storage-stable colour-stable aqueous liquid dye solutions according to Claim 4 **characterized in that** the permeate is continuously or intermittently replaced or supplemented by water or buffer solution so that the dye concentration of the permeate does not change by more than 20%.

6. Process for producing the concentrated storage-stable colour-stable aqueous liquid dye solutions according to Claim 4 **characterized in that** the step of membrane filtrating the aqueous solution or suspension of at least one crude cationic dye of the formula (I), using a semipermeable membrane, by applying a pressure is done at a pH of between 5.5 and 6.5 and preferably 5.9 and 6.1, at a temperature of between 20 and 50 degrees Celsius and preferably between 30 and 35 degrees Celsius.

7. Process for producing the concentrated storage-stable colour-stable aqueous liquid dye solutions according to Claim 4 **characterized in that**, in a further step, the dye solutions of the present invention are adjusted with an acid to pH 3 plus/minus one pH unit.

8. Use of concentrated storage-stable colour-stable aqueous liquid dye solutions according to Claim 1 for dyeing and/or printing cellulosic materials, especially paper and/or board and/or card and/or for dyeing or tinting wood.

9. Use of concentrated storage-stable colour-stable aqueous liquid dye solutions according to Claim 1 for producing inks and formulations for non-impact printing,
especially for inkjet printing.

## Patentansprüche

1. Konzentrierte, lagerbeständige, farbstabile, wässrige, flüssige Farbstofflösungen aufweisend
(i) einen oder mehrere kationisierbare Farbstoffe der Formel (I) 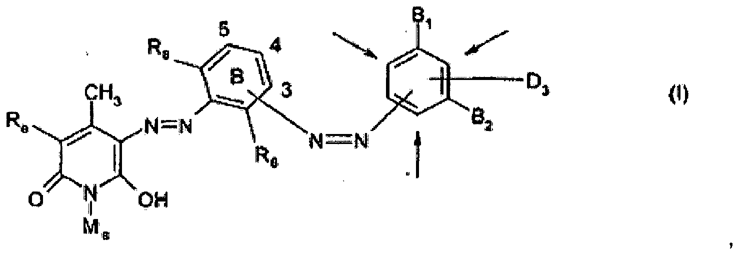 wobei B₁ und B₂ unabhängig voneinander -OH und -NH₂ und D₃ = H oder ein Rest der Formel 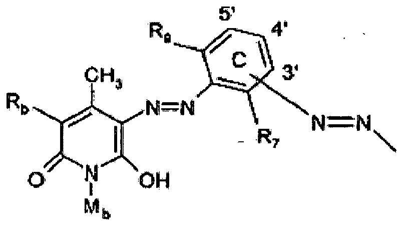 sind und
R₆, R₇, R₈ oder R₉ unabhängig voneinander H oder -SO₃H sind und
Mₐ oder M_{b} unabhängig voneinander die Bedeutung von M₁ bis M₁₀ haben, wobei
M₁ H ist,
M₂ -(CH₂)₃N(CH₃)₂ ist,
M₃ -(CH₂)₂N(CH₂CH₃)₂ ist,
M₄ 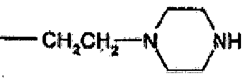
M₅ 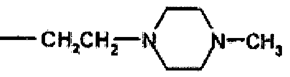 ist,
M₆ 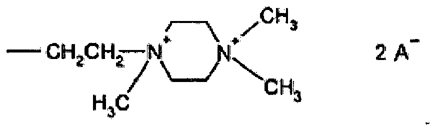 ist,
M₇ 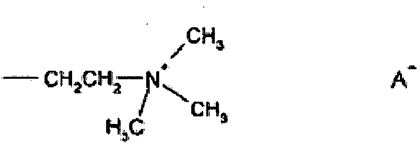 ist,
M₈ 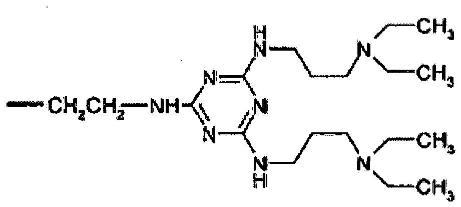 ist,
M₉ 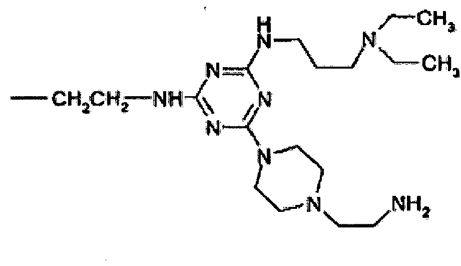 ist,
M₁₀ -(CH₂)₂NH₂ ist
und
Rₐ oder R_{b} unabhängig voneinander die Bedeutung von R₁ bis R₅ haben,
R₁ H ist,
R₂ 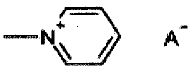 ist,
R₃ 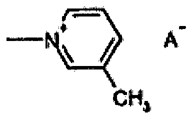 ist,
R₄ CN ist,
R₅ 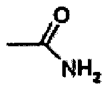 ist,
wobei A⁻ ein farbloses Anion ist, welches das Anion einer organischen Säure und/oder das Anion einer anorganischen Säure ist,
(ii) eine organische Säure und
(iii) Wasser und
(iv) mit einem höchstens äquimolaren Chloridionen-Anteil im Verhältnis zu dem in der Lösung vorhanden Farbstoff,
wobei die Farbstofflösungen von 10 bis 40 Gewichts-% an Farbstoff und von 0,5 bis 25 Gewichts-% an organischer Säure beinhalten.

2. Konzentrierte, lagerbeständige, farbstabile, wässrige, flüssige Farbstofflösungen gemäß Anspruch 1, **dadurch gekennzeichnet, dass** sie einen pH-Wert von 3 plus/minus einer pH-Einheit haben.

3. Konzentrierte, lagerbeständige, farbstabile, wässrige, flüssige Farbstofflösungen gemäß den Ansprüchen 1 und 2, **dadurch gekennzeichnet, dass** die Lösung des Weiteren einen Farbstoff der Formel (II) und/oder einen Farbstoff der Formel (III) 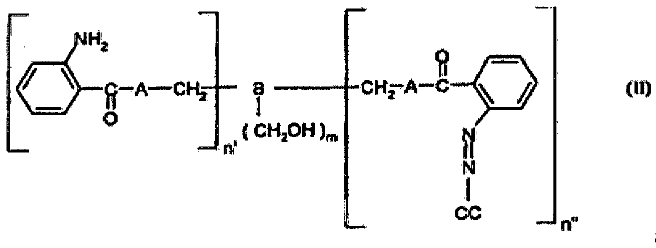 aufweisen,
wobei
jedes A unabhängig voneinander -NH- oder -O- ist,
B eine polyvalente Gruppe oder ein polyvalentes Atom ist,
n' und n" natürliche Zahlen sind und die Gesamtsumme aus n' und n" ≥ 2 ist,
m eine natürliche Zahl ≥ 0 ist, CC eine Gruppe ist, welche die Formel (c₁) oder (c₂) 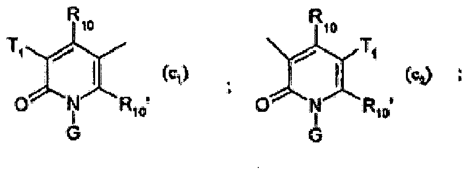 besitzt,
wobei
jedes R₁₀ unabhängig voneinander H; C₁₋₄-Alkyl; C₅₋₆-Cycloalkyl; Phenyl, Benzyl oder Phenylethyl ist,
jedes R₁₀' unabhängig voneinander H; -OH oder C₁₋₄-Alkyl ist
jedes T₁ unabhängig voneinander H; -CN; -COOR₁₅; CONR₁₆R₁₇; SO₂NR₁₆R₁₇; 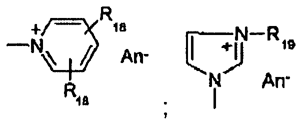 oder 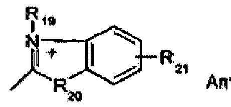 ist,
G H; -R₁₁NHR₁₂ oder -R₁₁NR₁₃R₁₄ ist, wobei
R₁₁ C₁₋₆-Alkylen oder C₂₋₆-Alkenylen ist,
R₁₂ und R₁₃ unabhängig voneinander H; unsubstituiertes C₁₋₆-Alkyl; C₂₋₆-Alkyl substituiert mit OH, CN oder Halogen; Phenyl-C₁₋₃-Alkyl, wobei der Phenylrest optional einfach-, zweifach- oder dreifach-substituiert ist mit Substituenten ausgewählt aus der Gruppe bestehend aus Chlor, C₁₋₄-Alkyl oder C₁₋₄-Alkoxy; unsubstituiertes C₅₋₆-Cycloalkyl oder C₅₋₆-Cycloalkyl, welches einfach, zweifach oder dreifach mit C₁₋₄-Alkylgruppen substituiert ist, sind,
R₁₄ die gleiche Bedeutung wie für R₁₂ oder R₁₃ hat oder ein Wasserstoffatom ist,
R₁₅ C₁₋₆-Alkylrest oder Phenyl-C₁₋₃-Alkylrest ist,
R₁₆ und R₁₇ unabhängig voneinander H oder ein C₁₋₄-Alkylrest sind,
R₁₈ in jedem Auftreten unabhängig H; C₁₋₄-Alkylrest; -NR₁₆R₁₇-(CH₂)₂₋₄-NR₁₆R₁₇ oder -CONR₁₆R₁₇ ist,
R₁₉ ein C₁₋₄-Alkylrest oder ein Hydroxy-C₁₋₄-Alkylrest ist,
R₂₀ -S- oder -O- ist,
R₂₁ ein Wasserstoffatom oder ein C₁₋₄-Alkylrest ist und
An⁻ ein farbloses Anion ist,
mit den Bedingungen, dass
(i) die Gesamtsumme aus n', n" und m geringer ist als die Zahl an Valenzen von B,
(ii) wenn die Gesamtsumme aus n' und n" = 2 ist, dann m ≥ 1 ist,
(iii) wenn die Gesamtsumme aus n' und n" = 3 und A = NH ist, dann m ≥ 1 ist,
und/oder 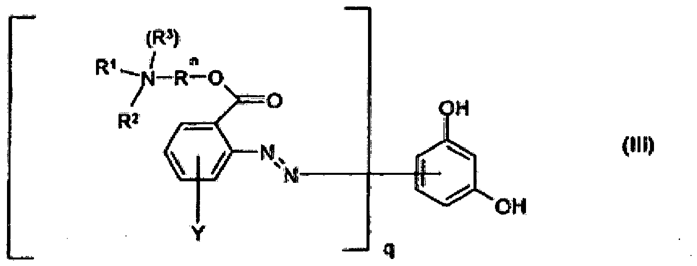 wobei
R¹, R² oder R³ unabhängig voneinander H, CH₃, C₂H₅, n-C₃H₇, i-C₃H₇, n-C₄H₉, i-C₄H₉, sec-C₄H₉ sind,
Rⁿ -C₂H₄-, -C₃H₆-, -CH(CH₃)CH₂- oder -C₄H₆- ist,
Y Wasserstoff oder eine Nitrogruppe ist,
q 1 oder 2 ist.

4. Verfahren zur Herstellung der konzentrierten, lagerbeständigen, farbstabilen, wässrigen, flüssigen Farbstofflösungen gemäß Anspruch 1, **dadurch gekennzeichnet, dass** eine wässrige Lösung oder Suspension von mindestens einem kationischen Rohfarbstoff der Formel (I) mit Hilfe einer semipermeablen Membran membrangefiltert wird, wobei die Ultrafiltration/Diafiltration bei fortwährend steigender Temperatur bis zu einer Temperatur von 35 °C durchgeführt wird, und unter Verwendung von Druck, um Salze und Synthesenebenprodukte mit Molekulargewichten von unter 500 und etwas Wasser zu entfernen, bis der Chloridionen-Anteil höchstens äquimolar in Bezug auf den Farbstoff der Formel (I) ist.

5. Verfahren zur Herstellung der konzentrierten, lagerbeständigen, farbstabilen, wässrigen, flüssigen Farbstofflösungen gemäß Anspruch 4, **dadurch gekennzeichnet, dass** das Permeat fortwährend oder in Abständen mit Wasser oder einer Pufferlösung so ersetzt oder ergänzt wird, dass sich die Farbstoffkonzentration des Permeats um nicht mehr als 20% ändert.

6. Verfahren zur Herstellung der konzentrierten, lagerbeständigen, farbstabilen, wässrigen, flüssigen Farbstofflösungen gemäß Anspruch 4, **dadurch gekennzeichnet, dass** der Schritt des Membranfiltrierens einer wässrigen Lösung oder Suspension von mindestens einem kationischen Rohfarbstoff der Formel (I) mit Hilfe einer semipermeablen Membran und unter Verwendung von Druck bei einem pH-Wert von 5,5 bis 6,5 und bevorzugt von 5,9 bis 6,1, und bei einer Temperatur von 20 bis 50 °C und bevorzugt von 30 bis 35 °C durchgeführt wird.

7. Verfahren zur Herstellung der konzentrierten, lagerbeständigen, farbstabilen, wässrigen, flüssigen Farbstofflösungen gemäß Anspruch 4, **dadurch gekennzeichnet, dass** in einem weiteren Schritt die Farbstofflösungen der vorliegenden Erfindung mit einer Säure auf einen pH-Wert von 3 plus/minus einer pH-Einheit eingestellt werden.

8. Verwendung der konzentrierten, lagerbeständigen, farbstabilen, wässrigen, flüssigen Farbstofflösungen gemäß Anspruch 1 zum Färben und/oder zum Bedrucken von cellulosischem Material, insbesondere Papier und/oder Pappe und/oder Karton, und/oder zum Färben oder Abtönen von Holz.

9. Verwendung der konzentrierten, lagerbeständigen, farbstabilen, wässrigen, flüssigen Farbstofflösungen gemäß Anspruch 1 zur Herstellung von Tinte und von Rezepturen für nichtmechanische Bedruckung, insbesondere für Tintenstrahlbedruckung.

## Revendications

1. Solutions de colorants liquides aqueuses stables en couleur stables au stockage concentrées comprenant
(i) un ou plusieurs colorants cationisables de la formule (I) : 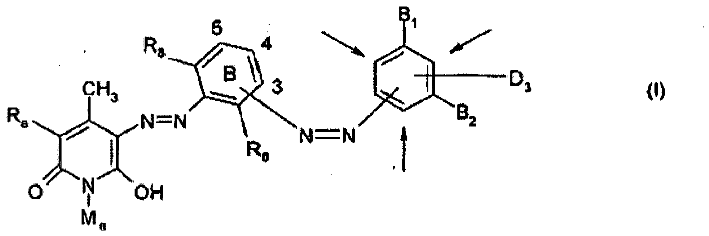 où B₁ et B₂ sont indépendamment -OH et NH₂ et D₃=H ou un radical de la formule 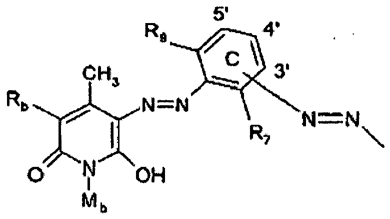 et
R₆, R₇, R₈ ou R₉ sont indépendamment H ou -SO₃H et
Mₐ ou M_{b} a indépendamment les significations de M₁ à M₁₀, où
M₁ est H,
M₂ est -(CH₂)₃N(CH₃)₂,
M₃ est -(CH₂)₂N(CH₂CH₃)₂,
M₄ est 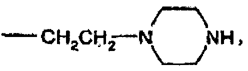
R₃ est 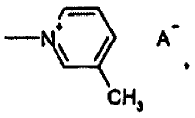
R₄ est CN,
R₅ est 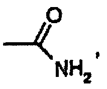
où A- est un anion non coloré qui est l'anion d'un acide organique et/ou l'anion d'un acide inorganique
(ii) un acide organique et
(iii) de l'eau et
(iv) présentant une fraction d'ion chlorure presque équimolaire sur la base du colorant présent dans la solution,
dans lesquelles les solutions de colorants contiennent de 10 à 40 % en poids de colorant, de 0,5 % à 25 % en poids de l'acide organique.

2. Solutions de colorants liquides aqueuses stables en couleur stables au stockage concentrées selon la revendication 1, **caractérisées en ce qu'**elles présentent un pH de 3 plus/moins une unité de pH.

3. Solutions de colorants liquides aqueuses stables en couleur stables au stockage concentrées selon la revendication 1 ou 2, **caractérisées en ce que** la solution comprend de plus un colorant de la formule (II) et/ou un colorant de la formule (III) 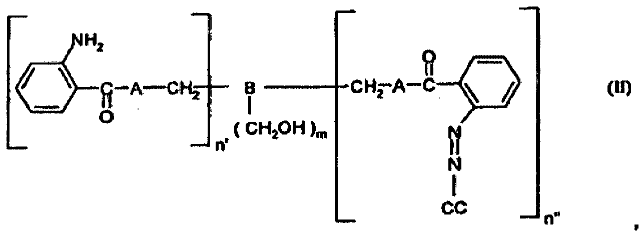 où
chaque A est indépendamment -NH- ou -O-,
M₅ est 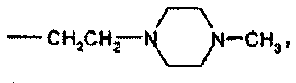 M₆ est 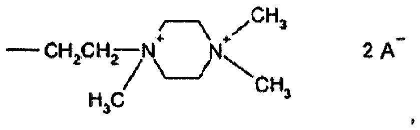 M₇ est 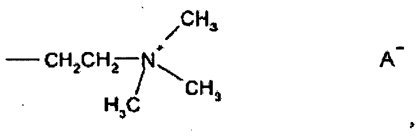 M₈ est 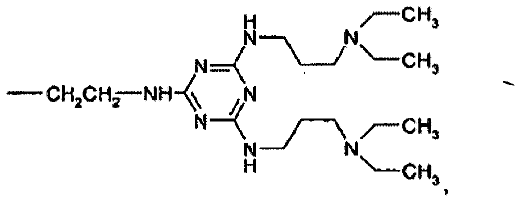 M₉ est 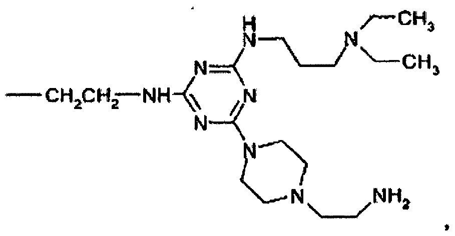 M₁₀ est -(CH₂)₂NH₂ et
Rₐ ou R_{b} a indépendamment les significations de R₁ à R₅ R₁ est H,
R₂ est 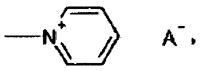
B est un groupe ou atome polyvalent,
n' et n" sont des nombres naturels et la somme totale de n' et n" est ≥ 2,
m est un nombre naturel ≥ 0,
CC est un groupe présentant la formule (c₁) ou (c₂) 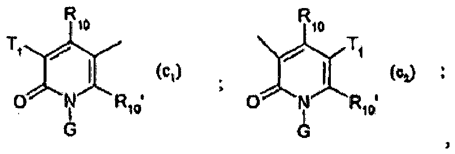 où
chaque R₁₀ est indépendamment H ; un groupe alkyle en C₁₋₄ ; cycloalkyle en C₅₋₆ ; phényle, benzyle ou phényléthyle,
chaque R₁₀' est indépendamment H ; un groupe -OH ou alkyle en C₁₋₄
chaque T₁ est indépendamment H ; -CN ; -COOR₁₅ ; CONR₁₆R₁₇ ;SO₂NR₁₆R₁₇ ; 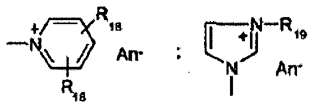 ou 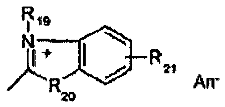
G est H ; -R₁₁NHR₁₂ ou -R₁₁NR₁₃R₁₄, où
R₁₁ est un groupe alkylène en C₁₋₆ ou alcénylène en C₁₋₆,
R₁₂ et R₁₃ sont indépendamment H ; un groupe alkyle en C₁₋₆ non substitué ; alkyle en C₂₋₆ substitué par OH, CN ou un atome d'halogène ; phényl-(alkyle en C₁₋₃), où le radical phényle est éventuellement substitué de manière simple, double ou triple par des substituants choisis dans le groupe constitué du chlore, d'un groupe alkyle en C₁₋₄ ou alcoxy en C₁₋₄ ; cycloalkyle en C₅₋₆ non substitué ou cycloalkyle en C₅₋₆ substitué de manière simple, double ou triple par des groupes alkyle en C₁₋₄,
R₁₄ a la signification de R₁₂ ou R₁₃ ou est un atome d'hydrogène,
R₁₅ est un radical alkyle en C₁₋₆ ou un radical phényl-(alkyle en C₁₋₃),
R₁₆ et R₁₇ sont indépendamment H ou un radical alkyle en C₁₋₄,
R₁₈ est à chaque apparition indépendamment H ; un radical alkyle en C₁₋₄ ; -NR₁₆R₁₇-(CH₂)₂₋₄-NR₁₆R₁₇ ou -CONR₁₆R₁₇,
R₁₉ est un radical alkyle en C₁₋₄ ou un radical hydroxy-(alkyle en C₁₋₄),
R₂₀ est -S- ou -O-,
R₂₁ est un atome d'hydrogène ou un radical alkyle en C₁₋₄ et
An⁻ est un anion non coloré,
avec les conditions que
(i) la somme total de n', n" et m est inférieure au nombre de valences de B,
(ii) lorsque la somme totale de n' et n" = 2, alors m est > 1,
(iii) lorsque la somme totale de n' et n" = 3 et A = NH, alors m > 1,
et/ou 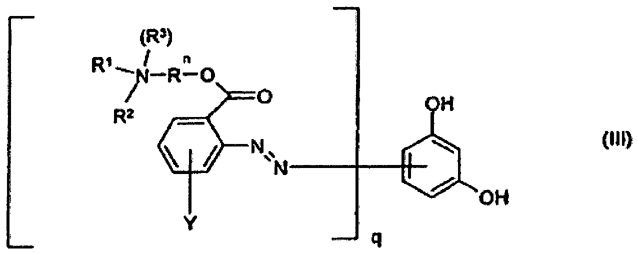 où
R¹, R² ou R³ sont indépendamment H, CH₃, C₂H₅, n-C₃H₇, i-C₃H₇, n-C₄H₉, i-C₄H₉, sec-C₄H₉,
R" est -C₂H₄-, -C₃H₆-, -CH(CH₃)CH₂- ou -C₄H₆-,
Y est l'hydrogène ou un groupe nitro,
q est égal à 1 ou 2.

4. Procédé de production des solutions de colorants liquides aqueuses stables en couleur stables au stockage concentrées selon la revendication 1, **caractérisé en ce qu'**une solution ou une suspension aqueuse d'au moins un colorant cationique brut de la formule (I) est filtrée sur membrane, en utilisant une membrane semi-perméable, dans lequel l'ultrafiltration/diafiltration est réalisée à une température augmentant en continu jusqu'à ce qu'au plus 35 degrés Celsius sont atteints en appliquant une pression pour éliminer des sels et des produits secondaires de synthèse présentant des masses moléculaires inférieures à 500 et une certaine quantité d'eau jusqu'à ce que la fraction d'ion chlorure soit au moins équimolaire par rapport au colorant de la formule (I).

5. Procédé de production des solutions de colorants liquides aqueuses stables en couleur stables au stockage concentrées selon la revendication 4, **caractérisé en ce que** le perméat est remplacé en continu ou de manière intermittente ou est additionné d'eau ou d'une solution tampon de sorte que la concentration en colorant du perméat ne change pas de plus de 20 %.

6. Procédé de production des solutions de colorants liquides aqueuses stables en couleur stables au stockage concentrées selon la revendication 4, **caractérisé en ce que** l'étape de filtration sur membrane de la solution ou suspension aqueuse d'au moins un colorant cationique brut de la formule (I), en utilisant une membrane semi-perméable, par application d'une pression est réalisée à un pH de 5,5 à 6,5 et de préférence de 5,9 à 6,1, à une température de 20 à 50 degrés Celsius et de préférence de 30 à 35 degrés Celsius.

7. Procédé de production des solutions de colorants liquides aqueuses stables en couleur stables au stockage concentrées selon la revendication 4, **caractérisé en ce que**, dans une étape supplémentaire, les solutions de colorants de la présente invention sont ajustées avec un acide à pH de 3 plus/moins une unité de pH.

8. Utilisation des solutions de colorants liquides aqueuses stables en couleur stables au stockage concentrées selon la revendication 1 pour teindre et/ou imprimer des matières cellulosiques, particulièrement du papier et/ou du carton et/ou une carte et/ou pour teindre ou colorer du bois.

9. Utilisation des solutions de colorants liquides aqueuses stables en couleur stables au stockage concentrées selon la revendication 1 pour produire des encres et des formulations destinées à une impression sans choc, particulièrement à une impression par jet d'encre.
